# EUROPEAN PATENT SPECIFICATION

(11) **EP 3 581 790 B1**
(45) Date of publication and mention of the grant of the patent: **06.08.2025**
(21) Application number: 18177858.0
(22) Date of filing: 14.06.2018
(51) Int. Cl.: F03D 1/06, F03D 13/10

(54) **WIND TURBINE ROTOR BLADE**
ROTORSCHAUFEL EINER WINDTURBINE
PALE DE ROTOR D'ÉOLIENNE

(43) Date of publication of application: 18.12.2019
(73) Proprietor: Siemens Gamesa Renewable Energy A/S, 7330 Brande (DK)
(72) Inventor: GIROLAMO, Donato, 9400 Nørresundby (DK)
(74) Representative: SGRE-Association

(56) References cited:
- EP-A1- 1 584 817
- EP-A1- 3 222 846
- EP-A2- 2 391 807
- EP-B1- 2 391 807
- WO-A1-2013/075718
- WO-A2-01/42647
- ES-A1- 2 352 945
- JP-A- 2006 329 109
- JP-U- S55 170 356
- US-A- 4 412 784
- US-B2- 9 464 622

## Description

The invention describes a wind turbine rotor blade; a method of manufacturing a wind turbine rotor blade; and a method of assembling a wind turbine rotor blade.

Wind turbines are required to be very efficient in order to be competitive with other forms of energy and to reduce the cost of energy (COE). The main approach to increasing the efficiency of a wind turbine is to increase the size of its generator rotor and to also increase the size of its aerodynamic rotor by using longer rotor blades that can extract more energy from the wind.

However, manufacturing limitations as well as other issues such as transportation, installation and repair effectively place constraints on the length of a rotor blade, and can increase the overall COE of a wind turbine.

A wind turbine is generally made by moulding a composite material using a vacuum resin infusion technique. There are two principle ways of moulding a rotor blade. In one approach, two blade halves are moulded separately and then glued together along their outer edges. In another approach, the entire blade is moulded as one piece. Moulding a rotor blade in one piece can be preferred because manufacturing tolerances are less tight, the moulding procedure is less prone to error, and the finished blade does not have a large adhesive joint.

However, to manufacture a very long one-piece rotor blade, the resin flow process can be very complex to design and optimize on account of the large dimensions, the longer spans and the thicker structural components. These all increase the risk of extended manufacturing errors such as transverse wrinkles, poor resin impregnation, air pockets, dry fibre regions, etc. Even if it is possible to repair such a manufacturing error, the repair may be prohibitively expensive. However, the cost of scrapping an entire blade structure may be even higher.

Regardless of the manner in which a rotor blade is manufactured, the storage, transport and installation of a very long rotor blade are costly. In particular, conventional road transportation may not be possible for very long rotor blades.

It is known to manufacture rotor blades in two or more segments, and to assemble these segments on site. This approach can at least reduce the costs associated with storage, transport and installation. The structural stability of such a rotor blade depends very much on the nature of the joint between the segments. In one approach, each blade segment has an essentially cylindrical shape, even though the joint is at a distance from the root end, and a suitably shaped aerodynamic part is attached to one side of the blade to create an airfoil shape. This approach imposes severe limitations on the airfoil shape, and the extensive joint regions between blade segment and aerodynamic attachment make it difficult to achieve a smooth outer surface. In another approach, blade segments are made with an airfoil cross-section and are joined using complementary inserts that are secured inside the cavities of the moulded blade segments. ES2352945A1 for example proposes bolts extending perpendicularly through the ends of each blade segment, and fixing the positions of the bolts by rods. Other ways of connecting rotor blade segments are known from the prior art. For example, it is also known from EP2391807A2, WO2013/075718 and JP2006329109A to connect rotor blade segments using inserts and bolts. Additional prior art solutions are also available in ES 2 352 945 and WO 2013/075718.

However, the ability of such connections to transfer flapwise loads is limited, so that the blade lifetime may be shortened. The prior art segmented blades generally also require complex assembly measures in order to install a down conductor for a lightning protection system.

It is therefore an object of the invention to provide an alternative way of joining rotor blade segments to overcome the problems outlined above.

This object is achieved by the wind turbine rotor blade of claim 1; by the method of claim 10 of manufacturing a wind turbine rotor blade; by the method of claim 13 of assembling a wind turbine rotor blade; and by the wind turbine of claim 15.

According to the invention, the wind turbine rotor blade comprises at least a first rotor blade segment and a second rotor blade segment connected by means of a connecting interface. The connecting interface comprises a plurality of bores formed in a connecting face of each rotor blade segment, and each bore extends in a longitudinal direction of the rotor blade. The bores are formed so that the bores of the second rotor blade segment align with bores of the first rotor blade segment. Each bore terminates in a cavity dimensioned to accommodate a threaded nut. The connecting interface further comprises a plurality of double-end stud bolts, wherein a double-end stud bolt comprises a shaped portion formed between a first threaded end and a second threaded end, and shaped to engage with a tightening means. The first threaded end of each double-end stud bolt extends through a bore of the first rotor blade segment and is screwed into a threaded nut held in a cavity of the first rotor blade segment; the second threaded end of each double-end stud bolt extends through a bore of the second rotor blade segment and is screwed into a threaded nut held in a cavity of the second rotor blade segment.

In the context of the invention, the arrangement of bores, cavities, double-end stud bolts and threaded nuts are collectively referred to as the "connecting interface" between two rotor blade segments.

An advantage of the wind turbine rotor blade according to the invention is that the connecting interface can be realised in a more economical manner compared to prior art solutions. Furthermore, the inventive rotor blade can very effectively withstand flapwise bending loads that arise mainly due to wind pressure. Such loads result in tensile and compressive stresses in the blade material, and it is important to design a wind turbine rotor blade to be able to withstand these loads in order to achieve a favourably long lifetime. Any joint between rotor blade segments must be able to transfer these loads correctly. The inventive rotor blade fulfils this requirement, since the arrangement of stud bolts can very effectively transfer flapwise loads from one blade segment to the other.

According to the invention, the method of manufacturing such a wind turbine rotor blade comprises the steps of moulding at least a first rotor blade segment and a second rotor blade segment, wherein the rotor blade segments are moulded to comprise complementary connecting faces. The method further comprises the steps of forming a plurality of bores in a connecting face of each rotor blade segment, each bore extending in a longitudinal direction of the rotor blade and dimensioned to accommodate one end of a double-end stud bolt of a connecting interface; forming a cavity at the end of each bore, wherein a cavity is dimensioned to accommodate a threaded nut corresponding to the threaded end of the double-end stud bolt; and arranging a threaded nut in each of the plurality of cavities. The order given here for the method steps is arbitrary, and the steps can be performed in any suitable order when carrying out the inventive method.

An advantage of the inventive manufacturing method is that rotor blade segments can be prepared with less effort that comparable rotor blade segments manufactured using a prior art technique.

According to the invention, such a wind turbine rotor blade is assembled by aligning the bores of a first rotor blade segment with the bores of a second rotor blade segment; arranging a double-end stud bolt in each pair of aligned bores; engaging a tightening means or tightening tool with the shaped portion of a double-end stud bolt; and actuating the tightening means to screw the threaded ends of each double-end stud bolt into the corresponding threaded nuts.

The wind turbine according to the invention comprises a number of rotor blades as described above in the context of the invention. Usually, a wind turbine comprises three rotor blades mounted to a hub.

Particularly advantageous embodiments and features of the invention are given by the dependent claims, as revealed in the following description. Features of different claim categories may be combined as appropriate to give further embodiments not described herein.

In the following, it may be assumed that a wind turbine rotor blade is for a large wind turbine, for which an assembled rotor blade can have a length of 75 m or more. The rotor blade segments can be moulded using any appropriate moulding technique. In one possible approach, a rotor blade segment can be manufactured by moulding two halves and gluing the cured segment halves along their outer edges using a suitable adhesive. However, in a particularly preferred embodiment of the invention, a rotor blade segment is moulded using a closed-mould technique in which the entire blade segment is moulded in one moulding step, thus eliminating the problems associated with adhesive bonds.

A double-ended stud bolt is in the form of a rod with a threaded portion at each outer end. Since the purpose of the double-ended stud bolt is to pull the connecting faces of the rotor blade segments towards each other, one of the threaded ends has a left-hand thread, and the other threaded end has a right-hand thread. When the ends of a stud bolt are inserted into the threaded nuts contained in the cavities, and the stud bolt is turned in the appropriate direction, the resulting inward force is transferred via the threaded nuts to the connecting faces of the rotor blade segments.

In a particularly preferred embodiment of the invention, bores and cavities of a connecting interface are formed in a precast component, and the precast component is embedded in the rotor blade segment during the moulding procedure. Preferably, the precast component is a precast spar cap. This can be prepared in advance of the rotor blade segment moulding procedure. The precast spar cap is preferably realised to comprise fibreglass composite material at least in a region near the connecting face of a rotor blade segment. A precast spar cap can be made entirely of a fibreglass composite material. Alternatively, the fibreglass composite material can transition to a carbon fibre material in a region further away from the connecting face of a rotor blade segment.

A precast spar cap can be made using a vacuum assisted resin transfer technique to obtain a robust and lightweight spar cap that can be embedded between composite layers of the rotor blade segment. The bores and cavities of the connecting interface are preferably machined in the body of the spar cap using appropriate tools such as a drill, a milling tool, etc. The bores of a connecting interface are machined into an outer face of a spar cap to extend in a longitudinal direction of the rotor blade. The cavities of the connecting interface can be milled from the outside surface of the spar cap, so that a threaded nut can be easily placed into the cavity. Once the threaded nuts have all been placed in the cavities, the cavities can be sealed to prevent the threaded nuts from falling out.

Preferably, a threaded nut is realised as a transverse nut. The body of the transverse nut is essentially cylindrical and arranged so that the long axis of the cylindrical nut is at right angles to the stud bolt and essentially perpendicular to the outer surface of the rotor blade. In the case that the cavities are formed in a precast component such as a spar cap, the long axis of the cylindrical nut is essentially perpendicular to the outer surface of the precast component.

The number of double-end stud bolts required to reliably connect two blade segments may depend on various factors such as the dimensions of the rotor blade segments, the diameter and length of the double-end stud bolts, etc. In a preferred embodiment of the invention, the connecting interface is realised to comprise 5 - 15 double-end stud bolts on the pressure side and on the section side to connect two blade segments.

In a preferred embodiment of the invention, the connecting interface comprises a means of spring-loading a threaded nut in its cavity. The spring-loading means can comprise any suitable kind of spring element that serves to press the threaded nut against the bore aperture so that, when the double-end stud bolt is inserted into the bore, the bolt end will easily find the threaded bushing of the transverse nut. In this way, the spring-loading means can facilitate and speed up the assembly process.

As mentioned above, wind turbine rotor blades are subject to different types of bending loads. In addition to flapwise loading, a wind turbine rotor blade is also subject to edgewise loading. The edgewise bending load is caused mainly by the force of gravity acting on the rotor blade, and is highest at the blade root. It is important for the wind turbine rotor blade also to be able to withstand edgewise bending loads. Therefore, in a particularly preferred embodiment of the invention, the connecting interface further comprises an edgewise load transfer assembly realised to transfer edgewise loads between the rotor blade segments. For example, in a preferred embodiment, the edgewise load transfer assembly comprises a first bracket embedded in the first rotor blade segment and a second bracket embedded in the second rotor blade segment, and a connecting means for connecting the first bracket to the second bracket. The brackets can be embedded in the laminate of the rotor blade segments and preferably align along the leading edge of the rotor blade. Each bracket can extend from the rotor blade segment by a short distance. The outer ends of the brackets can be joined together using suitable fasteners. To effectively transfer the edgewise loads, outer ends of the brackets are preferably shaped to lie against each other. For example, each bracket can undergo a right angle or 90° bend at its outer end, and the bent portions of two brackets are shaped to abut each other. Fasteners can extend through the abutting ends of the brackets to connect these in a secure manner. The brackets can be embedded in the laminate of the rotor blade segments and preferably align along a longitudinal axis of the blade. One bracket pair can be embedded in the laminate to extend along the leading edge of the rotor blade. A further bracket pair can be embedded in the laminate to extend parallel to the trailing edge of the rotor blade.

The rotor blade of a wind turbine is generally manufactured to incorporate at least one down conductor of a lightning protection system (LPS). A down conductor generally serves to provide a path for lightning current from a receptor at some point on the blade's outer surface to ground. An uninterrupted down conductor can be installed in a one-piece rotor blade. However, when a rotor blade is made of two or more segments, the down conductor may also comprise segments that need to be connected. In a particularly preferred embodiment of the invention, one or more double-ended stud bolts are used to connect two parts of a down conductor. The two parts of the down conductor will be arranged in two connected rotor blade segments. This can be achieved by forming an electrical connection between one end of a down conductor part and the threaded nut at one end of a stud bolt. In the same way, the threaded nut at the other end of the stud bolt is electrically connected to the down conductor part arranged in the other rotor blade segment. In the event of a lightning strike to the assembled rotor blade, the stud bolt forms part of the path for the lightning current.

As described above, a rotor blade is assembled by aligning the bores of the blade segments and arranging double-end stud bolts in the aligned bore pairs. A tightening tool is then engaged with the shaped portion of a double-end stud bolt and actuated to screw the threaded ends of each double-end stud bolt into the corresponding threaded nuts.

Preferably, the shaped portion is formed integrally with the body of the stud bolt, i.e. the bolt and the shaped portion are formed in one piece. Preferably, the shaped portion is formed at some point along the bolt to divide the bolt into two parts or bolt ends, one of which extends into a bore in the first rotor blade segment, while the other extends into a corresponding bore in the second rotor blade segment.

In one preferred embodiment of the invention, the shaped portion of a double-end stud bolt is realised in the form of a hexagonal nut that can engage with a correspondingly sized wrench. To connect two rotor blade segments, the wrench is used to successively tighten the bolts until all bolts have been tightened.

In an alternative preferred embodiment of the invention, the shaped portion is realised in the form of a sprocket to engage with links of a chain or belt comprising part of the tightening means. A suitable chain or belt can be arranged to engage with the outer teeth of all sprockets and then actuated so that all sprockets (and therefore all stud bolts) are simultaneously turned. Instead of a sprocket, the shaped portion of a stud bolt can be in the form of a cogwheel. In this case, the tightening means can comprise one or more suitably shaped cogwheels to engage with the stud bolt cogwheels, and may be realised to effect simultaneous tightening of all stud bolts.

Regardless of how the shaped portion of a stud bolt is realised, the bolt tightening means will generally require some room to manoeuvre in the space between rotor blade segments. Therefore, in a particularly preferred embodiment of the invention, the method of manufacturing a rotor blade comprises a step of forming a number of recesses at the connecting face of a rotor blade segment. The shape of the recess is determined by the type of tightening means that will be used, and also by the form of the shaped portion on the stud bolt. During assembly of the blade segments, a technician can deploy the tightening means until all bolts have been tightened and the blade segments are firmly joined at their connecting faces. The installation method preferably also includes a step of closing any gaps remaining after the tightening procedure is complete. The gaps can be closed by arranging appropriately shaped elements over the gaps and using adhesive to attach these elements to the rotor blade, for example. A sheet of adhesive film may be applied about the blade circumference to cover any resulting seam and to provide a smooth surface.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig 1 shows an exemplary embodiment of the inventive rotor blade;
Fig 2 shows a double-ended stud bolt for a connecting interface of an embodiment of the inventive rotor blade;
Fig 3 is a detailed view of part of a connecting interface of an embodiment of the inventive rotor blade;
Fig 4 shows a view onto a connecting face of an embodiment of the inventive rotor blade;
Fig 5 illustrates a stage in the in-situ assembly of an embodiment of the inventive rotor blade;
Figs 6 and 7 show two blade segments joined using the inventive method.

In the diagrams, like numbers refer to like objects throughout. Objects in the diagrams are not necessarily drawn to scale.

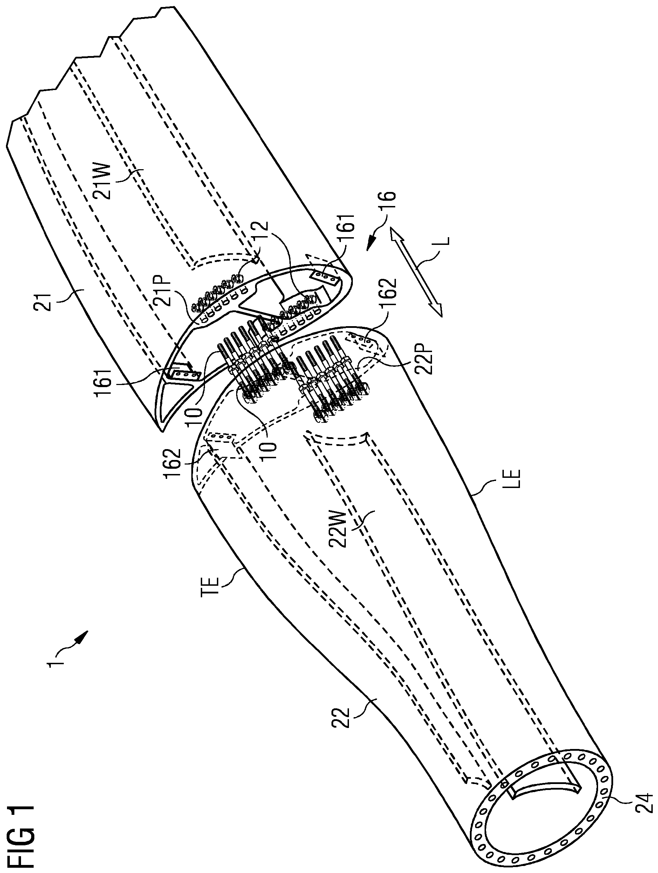

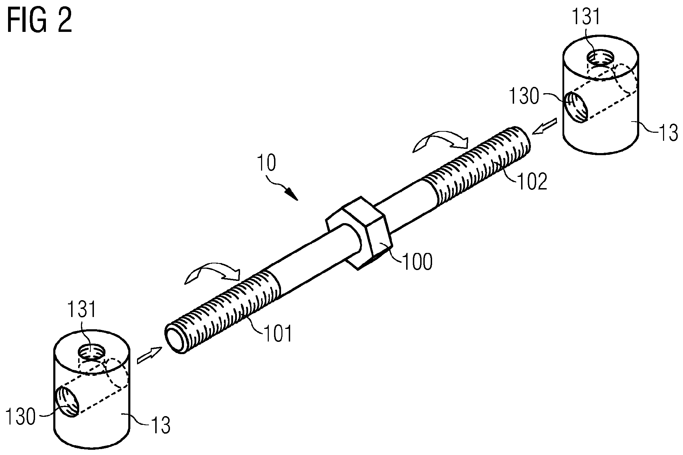

Fig 1 shows an exemplary embodiment of the inventive rotor blade 2, connected using double-ended stud bolts 10 shown in Fig 2. The bolts 10 extend in the direction of the longitudinal axis L of the rotor blade 2. Fig 1 shows two rotor blade segments 21, 22 and a connecting interface 1. One rotor blade segment 22 comprises the root end 24 of the blade, while the other blade segment 21 forms at least a section of the airfoil part of the blade 2. The connecting interface 1 comprises several double-ended stud bolts 10 inserted into aligned bore pairs 11 of the rotor blade segments 21, 22. The threaded end 101, 102 of each stud bolt 10 is screwed into a transverse nut 13 contained in a cavity 12.

The bolt 10 shown in Fig 2 has two co-linear ends 101, 102 and an integral shaped portion 100. Each of the two bolt ends 101, 102 terminates in a threaded portion. The threaded portions 101, 102 have opposite directions as indicated by the curved arrows. In this embodiment, the shaped portion 100 is in the form of a hexagonal nut 100, and this stud bolt 10 can be tightened by using a suitable hex wrench. During tightening, the opposite threaded ends will "pull" the threaded nuts 13 towards the centre of the bolt 10 as indicated by the inwardly pointing straight arrows. In this exemplary embodiment, the transverse nuts 13 each have an elliptical cross-section (when viewed from above) so that, when placed in a correspondingly shaped machined cavity, the nut 13 stays aligned in the cavity 12 until the assembly procedure can commence. Each threaded end 101, 102 of a stud bolt 10 enters a corresponding threaded bushing 130 in a transverse nut 13. The diagram also indicates an additional threaded bushing 131 through the upper part of a transverse nut 13. This will be used to connect a down conductor segment as will be explained below.

Returning to Fig 1, the diagram also indicates segments 21W, 22W of a web or spar in the interior of the rotor blade. In a one-piece rotor blade, the web would generally be formed as a single uninterrupted piece. Here, the rotor blade 2 is made by assembling two or more segments 21, 22, and the web therefore also be realised by structurally separate segments 21W, 22W. The diagram indicates a favourable shape for the ends of the web segments 21W, 22W so that loads are effectively transferred at the joint region.

The diagram also shows an edgewise load transfer means 16, in the form of brackets 161, 162 embedded in the rotor blade segments 21, 22 and shaped with abutting outer ends. The outer ends of the brackets 161, 162 can be secured by suitable fasteners. For example, the brackets 161, 162 may be machined to have aligned bores or threaded bushings, and may be joined by a suitable combination of bolts, metal screws, nuts, etc.

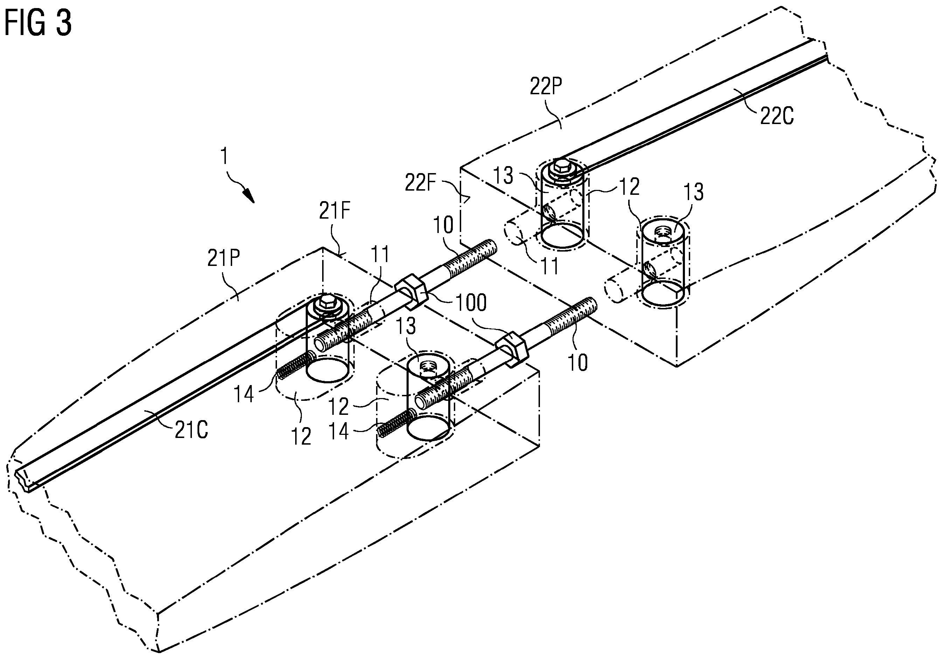

Fig 3 is a more detailed view of part of a connecting interface 1 and shows the orientation of the machined cavities 12 at the interior ends of the bores 11. For the sake of clarity, only two bores are shown, one of which is used in a path of the LPS. At least three stud bolts, more generally ten or more, would be used to connect two blade segments. The diagram shows transverse nuts 13 contained in the cavities 12. The elliptical body of a transverse nut 13 is held in place by the elliptically machined cavity 12 so that the transverse nut 13, once it is placed in its cavity 12, will not be able to turn. A nut 13 is placed in its cavity 13 so that the threaded bushing is aligned with the bore 11.

In this embodiment, the stud bolts 10 have one long end 101 and one shorter end 102, i.e. the integral nut 100 is not midway along the bolt 10. The diagram also shows a spring-loading means 14 in the cavities 12 of the first rotor blade segment 21. In this exemplary embodiment, the spring-loading means 14 is realised as a coiled spring 14 with a diameter that is slightly larger than the diameter of the threaded end 101 of the stud bolt 10, and is arranged between the rear of the cavity 12 and the transverse nut 13 so that the annular shape of the coiled spring 14 is centred about the threaded bushing 130. The spring 14 acts to press the nut 13 in the direction of the bore 11, and simplifies the process of joining the two rotor blade segments 21, 22. As a stud bolt 10 is tightened against the transverse nuts 13, its long end 101 will pass through the back end of a transverse nut 13 and into the empty space formed by the coiled spring 14.

This diagram also shows a segmented down conductor 21C, 22C comprising a first segment 21C and a second segment 22C. One end of the first segment 21C is mechanically and electrically connected to the transverse nut 13 at one end of a stud bolt 10, and the transverse nut 13 at the other end of that stud bolt 10 is mechanically and electrically connected to one end of the second segment 22C of the down conductor. The end of a down conductor segment 21C, 22C is preferably secured to the transverse nut 13 by preparing a threaded bushing at one of the outer ends of a transverse nut as shown in Fig 2. Metal screws can then be used to fasten the down conductor segments 21C, 22C to the transverse nuts 13. When the nuts 13 and bolt 10 are made of steel, for example, they provide a safe route for lightning current in the event of a lightning strike to the rotor blade 2.

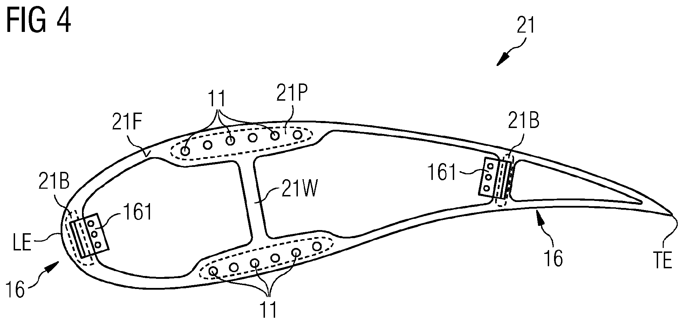

Fig 4 shows a view onto a connecting face 21F of a first rotor blade segment 21. The diagram indicates the positions of precast composite components 21P, in this case precast spar caps 21P, embedded in the laminate of the rotor blade segment 21, which may be assumed to be manufactured in a closed-mould technique so that there are no glue joints along the leading edge LE and trailing edge TE of the blade segment 21. The bores 11 of a connecting interface are formed in the precast spar caps 21P before these are embedded in the laminate. A web segment 21W extends perpendicularly between the spar caps, and may be formed as shown in Fig 1 for effective load transfer at the joint between blade segments.

The diagram also shows precast composite components 21B embedded as bracket holders 21B along the leading edge LE and parallel to the trailing edge TE. A bracket 161 of an edgewise load transfer means 16 is embedded in each bracket holder 21B.

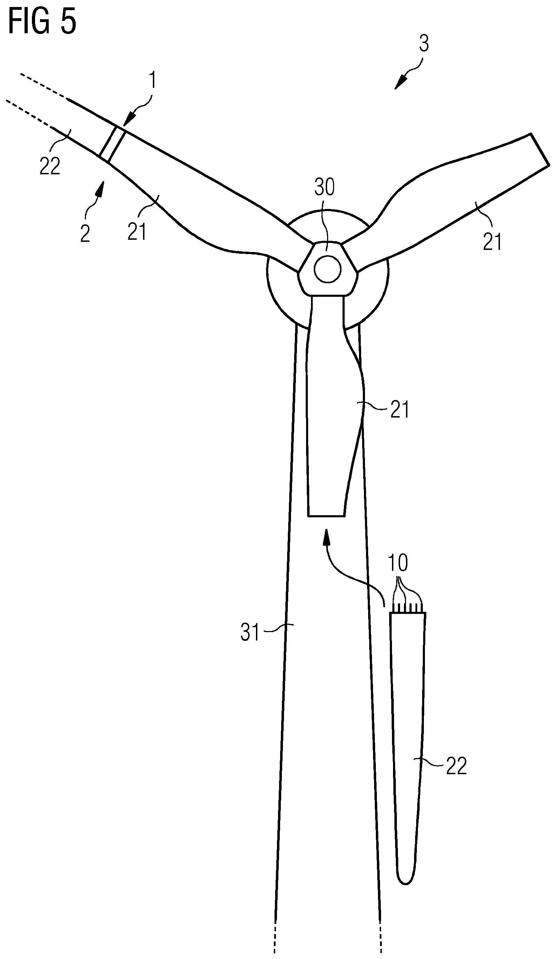

Fig 5 illustrates a stage in the in-situ assembly of the inventive rotor blade 2 for a wind turbine 3. Initially, three inner blade segments 21 are mounted to the hub 30, and this "star" assembly can be raised in one step and mounted at the top of the tower 31. In this diagram, one rotor blade 2 has already been assembled, as shown in the upper left-hand side. The hub 30 has been turned to bring the next first blade segment 21 into a vertical orientation. A second blade segment 22 is being hoisted into place using a crane (not shown). The diagram indicates bolts 10 of a connecting interface extending from the connecting face of the second blade segment 22. These bolts 10 will align with bores of the first blade segment 21.

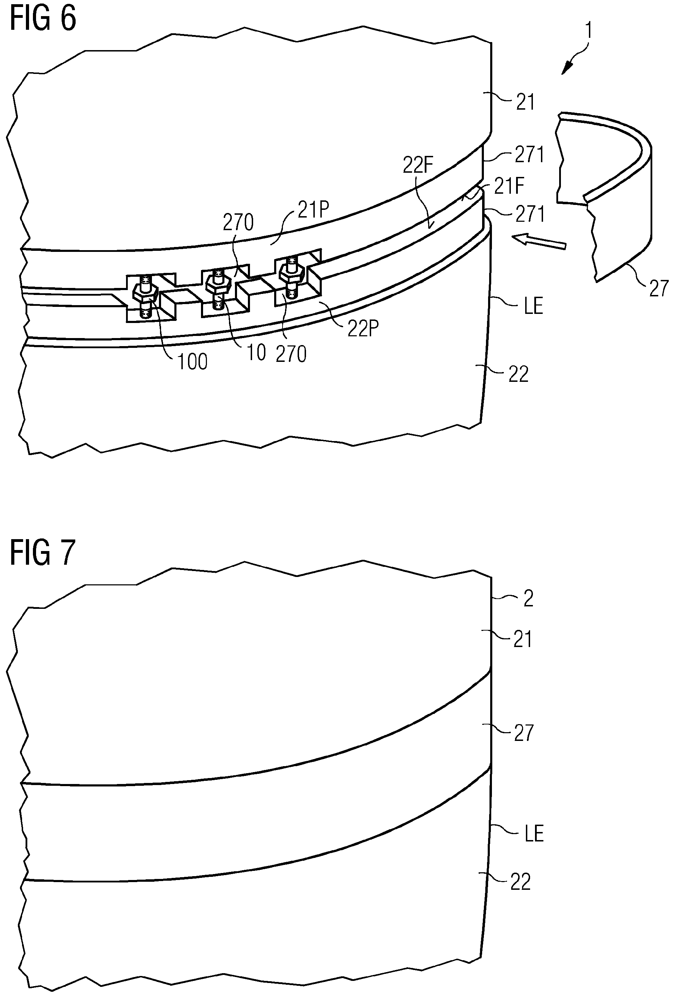

Fig 6 shows two blade segments 21, 22 shortly before the bolts 10 have been fully tightened. After tightening, the connecting faces 21F, 22F will lie against each other. The diagram indicates recesses 270 formed in the precast composite parts 21P, 22P to facilitate tightening of the bolts 10 using a hex wrench. To obtain a smooth aerodynamic surface without gaps or holes, the outer ends of the rotor blade segments 21, 22 are designed to form a wide gap or recess with the same thickness and width as a cover ply. This shape can be obtained during the casting stage, or can be formed after casting in a milling step. Finally, a precast ply cover 27 is arranged to close this wide gap 271 around the perimeter of the rotor blade. This cover 27 can be glued into place using a suitable structural adhesive. The precast ply cover 27 can be realised as one or more thin flexible composite precast panels that can be bonded or even riveted into place on the outside surface of the assembled blade 2.

Although the present invention has been disclosed in the form of preferred embodiments and variations thereon, it will be understood that numerous additional modifications and variations could be made thereto without departing from the scope of the protection which is defined by the appended claims.

## Claims

1. A wind turbine rotor blade (2) comprising at least a first rotor blade segment (21) and a second rotor blade segment (22) connected by means of a connecting interface (1), which connecting interface (1) comprises
- a plurality of bores (11) formed in a connecting face (21F, 22F) of each rotor blade segment (21, 22), each bore (11) extending in a longitudinal direction (L) of the rotor blade (2) and terminating in a cavity (12) dimensioned to accommodate a threaded nut (13);
- a threaded nut (13) arranged in each of the plurality of cavities (12); and
- a plurality of double-end stud bolts (10), wherein a double-end stud bolt (10) comprises a shaped portion (100) formed between a first threaded end (101) and a second threaded end (102), which shaped portion (100) is shaped to engage with a bolt tightening means; and wherein the first threaded end (101) of each double-end stud bolt (10) is screwed into a threaded nut (13) held in a cavity (12) of the first rotor blade segment (21), and the second threaded end (102) of each double-end stud bolt (10) is screwed into a threaded nut (13) held in a cavity (12) of the second rotor blade segment (22).

2. A wind turbine rotor blade according to claim 1, wherein the bores (11) and cavities (12) of the connecting interface (1) are formed in a precast component (21P, 22P) embedded in the body of a rotor blade segment (21, 22).

3. A wind turbine rotor blade according to claim 2, wherein the precast component (21, 22P) comprises a spar cap.

4. A wind turbine rotor blade according to any of the preceding claims, wherein the connecting interface (1) is realised to comprise 3 - 15 double-end stud bolts (10) to connect two blade segments (21, 22).

5. A wind turbine rotor blade according to any of the preceding claims, wherein a threaded nut (13) is springloaded in its cavity (12).

6. A wind turbine rotor blade according to any of the preceding claims, comprising a segmented down conductor (21C, 22C), wherein an end of a down conductor segment (21C, 22C) is electrically connected to a threaded nut (13) of the connecting interface (1).

7. A wind turbine rotor blade according to any of the preceding claims, wherein the shaped portion (100) is realised in the form of a hexagonal nut to engage with a wrench.

8. A wind turbine rotor blade according to any of the preceding claims, wherein the connecting interface (1) further comprises an edgewise load transfer assembly (16) realised to transfer edgewise loads between the rotor blade segments (21, 22).

9. A wind turbine rotor blade according to claim 8, wherein the edgewise load transfer assembly (16) comprises a first bracket (161) embedded in the first rotor blade segment (21) and a second bracket (162) embedded in the second rotor blade segment (22), and a connecting means for connecting the first bracket (161) to the second bracket (162).

10. A method of manufacturing a wind turbine rotor blade (2) according to any of claims 1 to 9, comprising the steps of
- moulding at least a first rotor blade segment (21) and a second rotor blade segment (22), wherein the rotor blade segments (21, 22) are moulded to comprise complementary connecting faces (21F, 22F);
- forming a plurality of bores (11) in a connecting face (21F, 22F) of each rotor blade segment (21, 22), each bore (11) extending in a longitudinal direction (L) of the rotor blade (2) and dimensioned to accommodate one end (101, 102) of a double-end stud bolt (10) of the connecting interface (1);
- forming a cavity (12) at the end of each bore (11), wherein a cavity (12) is dimensioned to accommodate a threaded nut (13) corresponding to the threaded end (101, 102) of the double-end stud bolt (10); and
- arranging a threaded nut (13) in each of the plurality of cavities (1).

11. A method according to claim 10, wherein bores (11) and cavities (12) of the connecting interface (1) are machined at an outer face (21F, 22F) of a precast component (21P, 22P), and wherein the step of moulding a rotor blade segment (21, 22) comprises a step of embedding such a precast component (21P, 22P) in the body of the rotor blade segment (21, 22).

12. A method according to claim 10 or claim 11, comprising a step of forming a number of recesses (270, 271) at the outer end of a rotor blade segment (21, 22), wherein a recess (270, 271) is shaped to accommodate a bolt tightening means during assembly of the rotor blade segments (21, 22).

13. A method of assembling a wind turbine rotor blade (2) according to any of claims 1 to 9, comprising the steps of
- arranging a double-end stud bolt (10) in each bore (11) of a first rotor blade segment (21);
- aligning the bores (11) of the first rotor blade segment (21) with the bores (11) of a second rotor blade segment (22);
- engaging a bolt tightening means with the shaped portion (100) of a double-end stud bolt (10); and
- actuating the bolt tightening means to screw the threaded ends (101, 102) of each double-end stud bolt (10) into the corresponding threaded nuts (13).

14. A method according to claim 13, comprising a step of closing spaces (270, 271) remaining at the interface between joined rotor blade segments (21, 22).

15. A wind turbine (3) comprising a number of rotor blades (2) according to any of claims 1 to 9.

## Patentansprüche

1. Rotorblatt (2) für eine Windenergieanlage, umfassend zumindest ein erstes Rotorblattsegment (21) und ein zweites Rotorblattsegment (22), die mittels einer Verbindungsstelle (1) miteinander verbunden sind, wobei die Verbindungsstelle (1) Folgendes umfasst:
- eine Vielzahl von Bohrungen (11), die in einer Verbindungsfläche (21F, 22F) jedes Rotorblattsegments (21, 22) ausgebildet sind, wobei sich jede Bohrung (11) in einer Längsrichtung (L) des Rotorblatts (2) erstreckt und in einem Hohlraum (12) endet, der zum Aufnehmen einer Gewindemutter (13) dimensioniert ist;
- eine in jeder der Vielzahl von Hohlräumen (12) angeordnete Gewindemutter (13); und
- eine Vielzahl von Doppelgewindestiften (10), wobei ein Doppelgewindestift (10) einen zwischen einem ersten Gewindeende (101) und einem zweiten Gewindeende (102) ausgebildeten Formabschnitt (100) aufweist, wobei der Formabschnitt (100) so gestaltet ist, dass er mit einem Schraubmittel in Eingriff bringbar ist; und wobei das erste Gewindeende (101) jedes Doppelgewindestifts (10) in eine in einem Hohlraum (12) des ersten Rotorblattsegments (21) gehaltene Gewindemutter (13) eingeschraubt ist und das zweite Gewindeende (102) jedes Doppelgewindestifts (10) in eine in einem Hohlraum (12) des zweiten Rotorblattsegments (22) gehaltene Gewindemutter (13) eingeschraubt ist.

2. Rotorblatt für eine Windenergieanlage nach Anspruch 1, wobei die Bohrungen (11) und Hohlräume (12) der Verbindungsstelle (1) in einem Fertigbauteil (21P, 22P) ausgebildet sind, das im Körper eines Rotorblattsegments (21, 22) eingebettet ist.

3. Rotorblatt für eine Windenergieanlage nach Anspruch 2, wobei das Fertigbauteil (21, 22P) einen Gurtholm umfasst.

4. Rotorblatt für eine Windenergieanlage nach einem der vorhergehenden Ansprüche, wobei die Verbindungsstelle (1) dazu ausgelegt ist, 3 bis 15 Doppelgewindestifte (10) zum Verbinden von zwei Rotorblattsegmenten (21, 22) aufzuweisen.

5. Rotorblatt für eine Windenergieanlage nach einem der vorhergehenden Ansprüche, wobei eine Gewindemutter (13) in ihrem Hohlraum (12) federnd gelagert ist.

6. Rotorblatt für eine Windenergieanlage nach einem der vorhergehenden Ansprüche, umfassend einen segmentierten Ableiter (21C, 22C), wobei ein Ende eines Ableitersegments (21C, 22C) elektrisch mit einer Gewindemutter (13) der Verbindungsstelle (1) verbunden ist.

7. Rotorblatt für eine Windenergieanlage nach einem der vorhergehenden Ansprüche, wobei der Formabschnitt (100) als Sechskantmutter zur Betätigung mit einem Schraubwerkzeug ausgebildet ist.

8. Rotorblatt für eine Windenergieanlage nach einem der vorhergehenden Ansprüche, wobei die Verbindungsstelle (1) ferner eine in Kantenrichtung wirkende Lastübertragungsanordnung (16) umfasst, die dazu ausgelegt ist, Kantenlasten zwischen den Rotorblattsegmenten (21, 22) zu übertragen.

9. Rotorblatt für eine Windenergieanlage nach Anspruch 8, wobei die Lastübertragungsanordnung (16) eine erste Halterung (161), die im ersten Rotorblattsegment (21) eingebettet ist, und eine zweite Halterung (162), die im zweiten Rotorblattsegment (22) eingebettet ist, sowie ein Verbindungsmittel zum Verbinden der ersten Halterung (161) mit der zweiten Halterung (162) umfasst.

10. Verfahren zur Herstellung eines Rotorblatts (2) für eine Windenergieanlage nach einem der Ansprüche 1 bis 9, umfassend die Schritte:
- Formen von zumindest einem ersten Rotorblattsegment (21) und einem zweiten Rotorblattsegment (22), wobei die Rotorblattsegmente (21, 22) so geformt werden, dass sie komplementäre Verbindungsflächen (21F, 22F) aufweisen;
- Ausbilden einer Vielzahl von Bohrungen (11) in einer Verbindungsfläche (21F, 22F) jedes Rotorblattsegments (21, 22), wobei sich jede Bohrung (11) in Längsrichtung (L) des Rotorblatts (2) erstreckt und zum Aufnehmen eines Endes (101, 102) eines Doppelgewindestifts (10) der Verbindungsstelle (1) dimensioniert ist;
- Ausbilden eines Hohlraums (12) am Ende jeder Bohrung (11), wobei ein Hohlraum (12) zum Aufnehmen einer Gewindemutter (13) dimensioniert ist, die dem Gewindeende (101, 102) des Doppelgewindestifts (10) entspricht; und
- Anordnen einer Gewindemutter (13) in jeder der Vielzahl von Hohlräumen (1).

11. Verfahren nach Anspruch 10, wobei die Bohrungen (11) und Hohlräume (12) der Verbindungsstelle (1) an einer Außenfläche (21F, 22F) eines Fertigbauteils (21P, 22P) bearbeitet werden und wobei der Schritt des Formens eines Rotorblattsegments (21, 22) einen Schritt des Einbettens eines solchen Fertigbauteils (21P, 22P) in den Körper des Rotorblattsegments (21, 22) umfasst.

12. Verfahren nach Anspruch 10 oder 11, umfassend einen Schritt des Ausbildens einer Anzahl von Aussparungen (270, 271) am Außenende eines Rotorblattsegments (21, 22), wobei eine Aussparung (270, 271) so gestaltet ist, dass sie während der Montage der Rotorblattsegmente (21, 22) ein Schraubwerkzeug aufnehmen kann.

13. Verfahren zur Montage eines Rotorblatts (2) für eine Windenergieanlage nach einem der Ansprüche 1 bis 9, umfassend die Schritte:
- Anordnen eines Doppelgewindestifts (10) in jeder Bohrung (11) eines ersten Rotorblattsegments (21);
- Ausrichten der Bohrungen (11) des ersten Rotorblattsegments (21) mit den Bohrungen (11) eines zweiten Rotorblattsegments (22);
- Eingreifen eines Schraubwerkzeugs mit dem Formabschnitt (100) eines Doppelgewindestifts (10); und
- Betätigen des Schraubwerkzeugs, um die Gewindeenden (101, 102) jedes Doppelgewindestifts (10) in die entsprechenden Gewindemuttern (13) einzuschrauben.

14. Verfahren nach Anspruch 13, umfassend einen Schritt des Verschließens von an der Schnittstelle zwischen verbundenen Rotorblattsegmenten (21, 22) verbleibenden Räumen (270, 271).

15. Windenergieanlage (3), umfassend eine Anzahl von Rotorblättern (2) nach einem der Ansprüche 1 bis 9.

## Revendications

1. Pale de rotor d'éolienne (2) comprenant au moins un premier segment de pale de rotor (21) et un second segment de pale de rotor (22) qui sont connectés au moyen d'une interface de connexion (1), laquelle interface de connexion (1) comprend :
- une pluralité d'alésages (11) qui sont formés à l'intérieur d'une face de connexion (21F, 22F) de chaque segment de pale de rotor (21, 22), chaque alésage (11) étant étendu dans une direction longitudinale (L) de la pale de rotor (2) et se terminant à l'intérieur d'une cavité (12) qui est dimensionnée pour loger un écrou fileté (13) ;
- un écrou filtré (13) qui est agencé à l'intérieur de chacune de la pluralité de cavités (12) ; et
- une pluralité de tiges métalliques partiellement filetées sans tête à deux extrémités (10), dans laquelle une tige métallique partiellement filetée sans tête à deux extrémités (10) comprend une partie profilée (100) qui est formée entre une première extrémité filetée (101) et une seconde extrémité filetée (102), laquelle partie profilée (100) est profilée de manière à être engagée avec un moyen de serrage de boulon ; et
dans laquelle la première extrémité filetée (101) de chaque tige métallique partiellement filetée sans tête à deux extrémités (10) est vissée à l'intérieur d'un écrou fileté (13) qui est contenu à l'intérieur d'une cavité (12) du premier segment de pale de rotor (21), et la seconde extrémité filetée (102) de chaque tige métallique partiellement filetée sans tête à deux extrémités (10) est vissée à l'intérieur d'un écrou fileté (13) qui est contenu à l'intérieur d'une cavité (12) du second segment de pale de rotor (22).

2. Pale de rotor d'éolienne selon la revendication 1, dans laquelle les alésages (11) et les cavités (12) de l'interface de connexion (1) sont formés selon un composant préfabriqué (21P, 22P) qui est intégré à l'intérieur du corps d'un segment de pale de rotor (21, 22).

3. Pale de rotor d'éolienne selon la revendication 2, dans laquelle le composant préfabriqué (21P, 22P) comprend une semelle de longeron.

4. Pale de rotor d'éolienne selon l'une quelconque des revendications précédentes, dans laquelle l'interface de connexion (1) est réalisée de manière à comprendre de 3 à 15 tiges métalliques partiellement filetées sans tête à deux extrémités (10) pour connecter deux segments de pale (21, 22).

5. Pale de rotor d'éolienne selon l'une quelconque des revendications précédentes, dans laquelle un écrou fileté (13) est chargé par ressort à l'intérieur de sa cavité (12).

6. Pale de rotor d'éolienne selon l'une quelconque des revendications précédentes, comprenant un conducteur de descente antifoudre segmenté (21C, 22C), dans laquelle une extrémité d'un segment de conducteur de descente antifoudre (21C, 22C) est connectée électriquement à un écrou fileté (13) de l'interface de connexion (1).

7. Pale de rotor d'éolienne selon l'une quelconque des revendications précédentes, dans laquelle la partie profilée (100) est réalisée selon la forme d'un écrou hexagonal destiné à être engagé avec une clé.

8. Pale de rotor d'éolienne selon l'une quelconque des revendications précédentes, dans laquelle l'interface de connexion (1) comprend en outre un assemblage de transfert de charges en position de bord (16) qui est réalisé de manière à transférer des charges en position de bord entre les segments de pale de rotor (21, 22).

9. Pale de rotor d'éolienne selon la revendication 8, dans laquelle l'assemblage de transfert de charges en position de bord (16) comprend une première console (161) qui est intégrée à l'intérieur du premier segment de pale de rotor (21) et une seconde console (162) qui est intégrée à l'intérieur du second segment de pale de rotor (22), et un moyen de connexion pour connecter la première console (161) à la seconde console (162).

10. Procédé de fabrication d'une pale de rotor d'éolienne (2) selon l'une quelconque des revendications 1 à 9, comprenant les étapes suivantes :
- le moulage d'au moins un premier segment de pale de rotor (21) et un second segment de pale de rotor (22), dans lequel les segments de pale de rotor (21, 22) sont moulés de manière à comprendre des faces de connexion complémentaires (21F, 22F) ;
- la formation d'une pluralité d'alésages (11) à l'intérieur d'une face de connexion (21F, 22F) de chaque segment de pale de rotor (21, 22), chaque alésage (11) étant étendu dans une direction longitudinale (L) de la pale de rotor (2) et étant dimensionné pour loger une extrémité (101, 102) d'une tige métallique partiellement filetée sans tête à deux extrémités (10) de l'interface de connexion (1) ;
- la formation d'une cavité (12) au niveau de l'extrémité de chaque alésage (11), dans lequel une cavité (12) est dimensionnée pour loger un écrou fileté (13) qui correspond à l'extrémité filetée (101, 102) de la tige métallique partiellement filetée sans tête à deux extrémités (10) ; et
- l'agencement d'un écrou fileté (13) à l'intérieur de chacune de la pluralité de cavités (12).

11. Procédé selon la revendication 10, dans lequel les alésages (11) et les cavités (12) de l'interface de connexion (1) sont usinés au niveau d'une face externe (21F, 22F) d'un composant préfabriqué (21P, 22P), et dans lequel l'étape de moulage d'un segment de pale de rotor (21, 22) comprend une étape d'intégration dudit composant préfabriqué (21P, 22P) à l'intérieur du corps du segment de pale de rotor (21, 22).

12. Procédé selon la revendication 10 ou la revendication 11, comprenant une étape de formation d'un certain nombre d'évidements (270, 271) au niveau de l'extrémité externe d'un segment de pale de rotor (21, 22), dans lequel un évidement (270, 271) est profilé de manière à loger un moyen de serrage de boulon pendant l'assemblage des segments de pale de rotor (21, 22).

13. Procédé d'assemblage d'une pale de rotor d'éolienne (2) selon l'une quelconque des revendications 1 à 9, comprenant les étapes suivantes :
- l'agencement d'une tige métallique partiellement filetée sans tête à deux extrémités (10) à l'intérieur de chaque alésage (11) d'un premier segment de pale de rotor (21) ;
- l'alignement des alésages (11) du premier segment de pale de rotor (21) avec les alésages (11) d'un second segment de pale de rotor (22) ;
- l'engagement d'un moyen de serrage de boulon avec la partie profilée (100) d'une tige métallique partiellement filetée sans tête à deux extrémités (10) ; et
- l'actionnement du moyen de serrage de boulon pour visser les extrémités filetées (101, 102) de chaque tige métallique partiellement filetée sans tête à deux extrémités (10) à l'intérieur des écrous filetés correspondants (13).

14. Procédé selon la revendication 13, comprenant une étape de fermeture des espaces (270, 271) qui subsistent au niveau de l'interface entre des segments de pale de rotor joints (21, 22).

15. Éolienne (3) comprenant un certain nombre de pales de rotor (2) selon l'une quelconque des revendications 1 à 9.
